# FASCICULE DE BREVET EUROPEEN

(11) **EP 3 868 667 B1**
(45) Date de publication et mention de la délivrance du brevet: **26.10.2022**
(21) Numéro de dépôt: 21157737.4
(22) Date de dépôt: 18.02.2021
(51) Int. Cl.: B64D 29/00, F02K 1/72, F02K 1/62

(54) **NACELLE D'AERONEF COMPORTANT UNE RAMPE DE SOUFFLANTE AVEC DES VOLETS ARTICULES**
LUFTFAHRZEUGGONDEL, DIE EINE GEBLÄSERAMPE MIT SCHWENKBAREN KLAPPEN UMFASST
AIRCRAFT NACELLE COMPRISING A FAN BLOWER WITH ARTICULATED FLAPS

(30) Priorité: 24.02.2020 FR 2001792
(43) Date de publication de la demande: 25.08.2021
(73) Titulaire: AIRBUS OPERATIONS, 31060 Toulouse Cedex 9 (FR)
(72) Inventeur: MENOU, Fabien, 31060 Toulouse (FR); CAZALIS, Julie, 31060 Toulouse (FR)
(74) Mandataire: Cabinet Le Guen Maillet

(56) Documents cités:
- EP-A1- 3 587 784
- WO-A1-2015/019007
- FR-A1- 3 059 646
- FR-A1- 3 068 080

## Description

### DOMAINE TECHNIQUE

La présente invention concerne une nacelle d'aéronef comportant une rampe de soufflante avec des volets articulés, ainsi qu'un aéronef comportant au moins une telle nacelle.

### ÉTAT DE LA TECHNIQUE ANTÉRIEURE

Les documents FR-A-3 068 080, FR-A-3 059 646, WO-A-2015/019007 et EP-A-3 587 784 divulguent des nacelles de l'état de la technique.

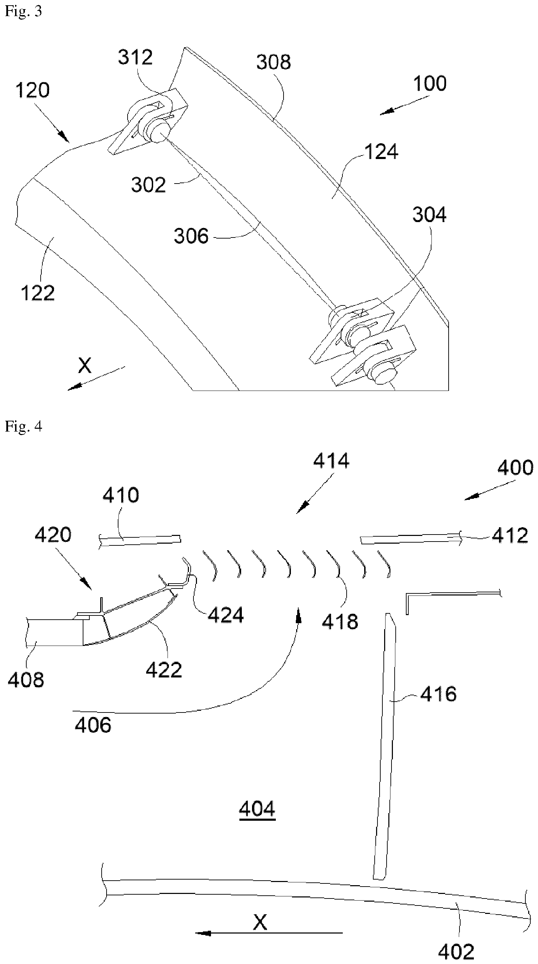

La Fig. 4 montre une nacelle 400 d'un aéronef de l'état de la technique, en particulier une nacelle 400 pour un turboréacteur double flux. Une telle nacelle 400 entoure le moteur représenté ici par son carter moteur 402 et la nacelle 400 délimite avec le carter moteur 402, une veine secondaire 404 dans laquelle un flux d'air 406 s'écoule de l'avant vers l'arrière.

La veine secondaire 404 se trouve à l'arrière d'une soufflante qui entraîne le flux d'air 406 et qui se trouve à l'intérieur d'un carter de soufflante 408 qui prend globalement la forme d'un cylindre et qui est fixée sur une structure fixe de la nacelle 400.

La nacelle 400 comporte également un capot fixe 410 solidaire de la structure fixe et un capot mobile 412 monté mobile en translation sur la structure fixe. Le capot fixe 410 et le capot mobile 412 prennent globalement la forme de cylindres. Le capot fixe 410 est autour du carter de soufflante 408.

Le capot mobile 412 est mobile entre une position avancée dans laquelle le capot mobile 412 prolonge le capot fixe 410 à l'arrière de ce dernier, et une position reculée dans laquelle le capot mobile 412 est écarté du capot fixe 410 pour ouvrir entre eux une ouverture 414 qui assure la communication fluidique entre la veine secondaire 404 et l'extérieur de la nacelle 400.

Le turboréacteur comporte également des portes d'inversion 416 où chacune est mobile entre une position escamotée dans laquelle elle n'obture pas la veine secondaire 404 et une position déployée (Fig. 4) dans laquelle elle obture la veine secondaire 404 pour diriger le flux d'air 406 vers l'ouverture 414 et assurer ainsi une inversion de poussée du turboréacteur.

Pour guider au mieux le flux d'air 406 dans l'ouverture 414 et vers l'extérieur, des déflecteurs 418 sont disposés en travers de l'ouverture 414.

Pour assurer le guidage du flux d'air 406 vers les déflecteurs 418, la nacelle 400 comporte une rampe de soufflante 420 qui est une structure aérodynamique fixée au carter de soufflante 408 juste en amont de l'ouverture 414. La rampe de soufflante 420 comporte une zone bombée 422 fixée à l'arrière du carter de soufflante 408 et orientée vers l'ouverture 414 et une zone droite 424 fixée à l'arrière de la zone bombée 422 et orientée globalement radialement juste devant les déflecteurs 418.

Bien que cette installation donne de bons résultats, la forme particulière de la rampe de soufflante 420, et en particulier la présence de la zone droite 424, entraîne le besoin d'accroître le diamètre de la nacelle 400 pour englober la rampe de soufflante 420, ce qui peut induire une traînée importante en vol.

### EXPOSÉ DE L'INVENTION

Un objet de la présente invention est de proposer une nacelle avec une rampe de soufflante équipée de volets articulés qui s'escamotent lorsque le capot arrière est avancé et permet de réduire l'épaisseur des lignes aérodynamiques.

À cet effet, est proposée une nacelle pour un aéronef, ladite nacelle comportant :
- un carter de soufflante délimitant une veine secondaire,
- un capot fixe disposé autour du carter de soufflante,
- un capot mobile qui est mobile entre une position avancée dans laquelle le capot mobile prolonge le capot fixe à l'arrière et une position reculée dans laquelle le capot mobile est écarté du capot fixe pour ouvrir entre eux une ouverture qui assure la communication fluidique entre la veine secondaire et l'extérieur de la nacelle,
- des déflecteurs solidaires du capot mobile où en position avancée, les déflecteurs sont autour du carter de soufflante et où en position reculée, les déflecteurs sont disposés en travers de l'ouverture,
- une rampe de soufflante comportant un socle et des volets où le socle prend la forme d'une couronne fixée à l'arrière du carter de soufflante, et où chaque volet comporte un bord aval et un bord amont opposé au bord aval, et est mobile en rotation sur le socle entre une position escamotée dans laquelle le bord amont se projette alors vers l'avant de la nacelle et une position déployée dans laquelle le bord amont se projette alors vers l'extérieur de la nacelle à travers l'ouverture et en amont des déflecteurs en position reculée,
où pour chaque volet, la rampe de soufflante comporte un élément de rappel qui contraint le volet dans la position déployée et où pour chaque volet, les déflecteurs comportent une butée qui vient en contact avec l'arrière dudit volet lorsque le capot mobile passe de la position reculée à la position avancée.

Ainsi, en position avancée, les volets sont repliés et leur encombrement est réduit. Avantageusement, chaque volet est fixé au socle par l'intermédiaire de deux articulations. Avantageusement, chaque articulation est constituée d'une chape solidaire du volet, d'une contre-chape solidaire du socle et d'un axe traversant la chape et la contre-chape. Avantageusement, chaque élément de rappel est un ressort de torsion emmanché sur l'axe, dont une des extrémités est contrainte contre le volet et dont une autre extrémité est contrainte contre le socle.

L'invention propose également un aéronef comportant un moteur et une nacelle selon l'une des variantes précédentes où le moteur est entouré par la nacelle.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef comportant une nacelle selon l'invention,
Fig. 2 est une représentation schématique et en coupe par un plan axial d'une nacelle selon l'invention,
Fig. 3 est une vue en perspective d'une rampe de soufflante selon l'invention, et
Fig. 4 est une représentation schématique et en coupe par un plan axial d'une nacelle de l'état de la technique.

### EXPOSÉ DÉTAILLÉ DE MODES DE RÉALISATION

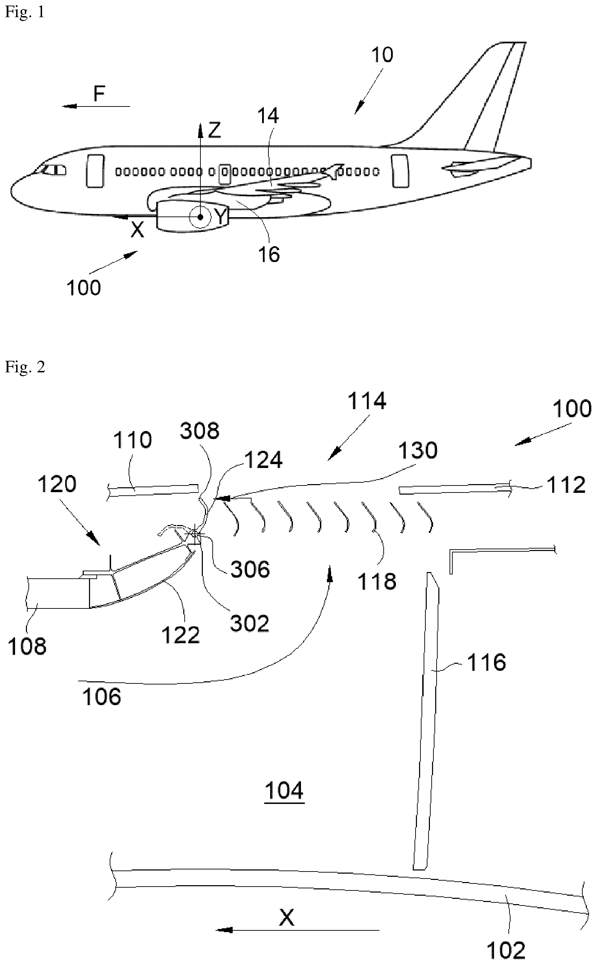

La Fig. 1 montre un aéronef 10 comportant une nacelle 100 qui est supportée par un mât 16 fixé sous une aile 14.

Dans la description qui suit, les termes relatifs à une position sont pris en référence à un aéronef en position d'avancement, c'est-à-dire comme il est représenté sur la Fig. 1 où la flèche F montre le sens d'avancement de l'aéronef 10.

Dans la description qui suit, et par convention, on appelle X l'axe longitudinal de la nacelle 100 qui est parallèle à l'axe longitudinal de l'aéronef 10, orienté positivement dans le sens d'avancement de l'aéronef 10, on appelle Y l'axe transversal de la nacelle 100 qui est horizontal lorsque l'aéronef 10 est au sol, et Z l'axe vertical ou hauteur verticale lorsque l'aéronef 10 est au sol, ces trois directions X, Y et Z étant orthogonales entre elles.

La Fig. 2 montre une coupe axiale de la nacelle 100 selon l'invention qui est similaire à la nacelle 400 de l'état de la technique, sauf en ce qui concerne la rampe de soufflante.

La nacelle 100 est mise en œuvre dans le cadre d'un turboréacteur double flux et elle entoure un moteur représenté ici par son carter moteur 102.

Le turboréacteur comporte une soufflante qui entraîne un flux d'air de l'avant vers l'arrière et qui est entourée d'un carter de soufflante 108 qui est fixé sur une structure fixe de la nacelle 100 autour du carter moteur 102.

Le carter de soufflante 108 et le carter moteur 102 délimitent entre eux une veine secondaire 104 dans laquelle le flux d'air 106 s'écoule.

La nacelle 100 comporte également un capot fixe 110 solidaire de la structure fixe et un capot mobile 112 monté mobile en translation sur la structure fixe. Dans le mode de réalisation de l'invention présenté ici, le capot fixe 110 est autour du carter de soufflante 108.

La veine secondaire 104 se prolonge à l'arrière du carter de soufflante 108 entre les capots 110 et 112 et le carter moteur 102.

Le capot mobile 112 est mobile entre une position avancée dans laquelle le capot mobile 112 prolonge le capot fixe 110 à l'arrière de ce dernier, et une position reculée dans laquelle le capot mobile 112 est écarté du capot fixe 110 vers l'arrière pour ouvrir entre eux une ouverture 114 qui assure la communication fluidique entre la veine secondaire 104 et l'extérieur de la nacelle 100. Comme pour l'état de la technique, le déplacement du capot mobile 112 est assuré par tous moyens appropriés et connus de l'homme du métier, comme par exemple des glissières, des vérins, des moteurs, etc.

Le turboréacteur comporte également des portes d'inversion 116 où chacune est mobile entre une position escamotée dans laquelle elle n'obture pas la veine secondaire 104 et une position déployée (Fig. 2) dans laquelle elle obture la veine secondaire 104 pour diriger le flux d'air 106 vers l'ouverture 114 puis l'extérieur et assurer ainsi une inversion de poussée du turboréacteur. Comme pour l'état de la technique, le déplacement des portes d'inversion 116 est assuré par tous moyens appropriés et connus de l'homme du métier, comme par exemple des glissières, des vérins, des moteurs, etc.

La nacelle 100 comporte des déflecteurs 118 (également appelés « cascades ») qui sont mobiles en translation avec le capot mobile 112, où en position avancée, les déflecteurs 118 se positionnent autour du carter de soufflante 108, entre ledit carter de soufflante 108 et le capot fixe 110, et où en position reculée, les déflecteurs 118 sont disposés en travers de l'ouverture 114 pour guider au mieux le flux d'air 106 dans l'ouverture 114 et vers l'extérieur.

Pour assurer le guidage du flux d'air 106 vers l'ouverture 114 et les déflecteurs 118, la nacelle 100 comporte une rampe de soufflante 120 qui comporte un socle 122 et des volets 124 et qui est disposée juste en amont de l'ouverture 114 et juste en amont des déflecteurs 118 lorsqu'ils sont en position reculée.

Le socle 122 prend la forme d'une couronne qui est fixée à l'arrière du carter de soufflante 108 et qui présente ici une forme bombée orientée vers l'ouverture 114 et la veine secondaire 104. Ce socle 122 permet d'élargir la veine secondaire 104 vers l'ouverture 114. Bien sûr, le socle 122 peut être partie intégrante du carter de soufflante 108.

Comme le montre la Fig. 3, plusieurs volets 124 sont montés mobiles en rotation sur le socle 122 autour d'un axe de rotation 302 globalement tangentiel au socle 122.

Ici, chaque volet 124 est monté articulé sur le socle 122 par l'intermédiaire de deux articulations 304.

Les volets 124 sont disposés les uns à la suite des autres autour du socle 122 et le nombre de volets 124 et l'étendue angulaire de chaque volet 124 dépendent, entre autres, du diamètre du socle 122.

Chaque volet 124 comporte un bord aval 306 qui est mobile en rotation sur le socle 122 et un bord amont 308 qui est le bord opposé au bord aval 306 et qui est donc le bord libre du volet 124.

Chaque volet 124 est mobile entre une position escamotée et une position déployée.

En position escamotée, le volet 124 se rabat vers le socle 122, ici vers la surface extérieure du socle 122. Cette position escamotée est représentée en traits mixtes sur la Fig. 2. Le bord amont 308 se projette alors vers l'avant de la nacelle 100. La position escamotée permet le passage des déflecteurs 118 autour des volets 124.

En position déployée, le volet 124 est globalement orienté selon un plan perpendiculaire à l'axe longitudinal X, et il est donc décollé du socle 122. Cette position déployée est représentée en traits continus sur la Fig. 2. Le bord amont 308 se projette alors vers l'extérieur de la nacelle 100, à travers l'ouverture 114, et le volet 124 vient alors en lieu et place de la zone droite 424 de l'état de la technique. Le passage de la position déployée à la position escamotée s'effectue par une rotation du volet 124 vers l'avant de la nacelle 100.

Pour chaque volet 124, la rampe de soufflante 120 comporte également un élément de rappel 312 qui contraint le volet 124 dans la position déployée.

Pour chaque volet 124, les déflecteurs 118 comportent une butée 130 qui vient en contact avec l'arrière de chaque volet 124 et repousse chacun d'eux vers sa position escamotée, lorsque le capot mobile 112 passe de la position reculée à la position avancée.

Ainsi, par mise en place de volets 124 escamotables, le diamètre de la nacelle 100, c'est-à-dire du capot fixe 110 et du capot mobile 112, est réduit, réduisant en même temps l'épaisseur des lignes aérodynamiques tout en conservant le guidage du flux d'air 106 vers l'extérieur en position reculée.

Ici chaque articulation 304 est constituée d'une chape solidaire du volet 124, d'une contre-chape solidaire du socle 122 et d'un axe traversant la chape et la contre-chape.

Chaque élément de rappel 312 est par exemple un ressort de torsion qui est emmanché sur l'axe, dont une des extrémités est contrainte contre le volet 124 et dont une autre extrémité est contrainte contre le socle 122. Ici il y a un élément de rappel 312 par articulation 304.

## Revendications

1. Nacelle (100) pour un aéronef (10), ladite nacelle (100) comportant :
- un carter de soufflante (108) délimitant une veine secondaire (104),
- un capot fixe (110) disposé autour du carter de soufflante (108),
- un capot mobile (112) mobile entre une position avancée dans laquelle le capot mobile (112) prolonge le capot fixe (110) à l'arrière et une position reculée dans laquelle le capot mobile (112) est écarté du capot fixe (110) pour ouvrir entre eux une ouverture (114) qui assure la communication fluidique entre la veine secondaire (104) et l'extérieur de la nacelle (100),
- des déflecteurs (118) solidaires du capot mobile (112) où en position avancée, les déflecteurs (118) sont autour du carter de soufflante (108) et où en position reculée, les déflecteurs (118) sont disposés en travers de l'ouverture (114), et
- une rampe de soufflante (120) comportant un socle (122) et des volets (124) où le socle (122) prend la forme d'une couronne fixée à l'arrière du carter de soufflante (108), et où chaque volet (124) comporte un bord aval (306) et un bord amont (308) opposé au bord aval (306),
la nacelle (100) étant **caractérisée en ce que** chaque volet (124) est mobile en rotation sur le socle (122) entre une position escamotée dans laquelle le bord amont (308) se projette alors vers l'avant de la nacelle (100) et une position déployée dans laquelle le bord amont (308) se projette alors vers l'extérieur de la nacelle (100) à travers l'ouverture (114) et en amont des déflecteurs (118) en position reculée, et **en ce que**
pour chaque volet (124), la rampe de soufflante (120) comporte un élément de rappel (312) qui contraint le volet (124) dans la position déployée et **en ce que** pour chaque volet (124), les déflecteurs (118) comportent une butée (130) qui vient en contact avec l'arrière dudit volet (124) lorsque le capot mobile (112) passe de la position reculée à la position avancée.

2. Nacelle (100) selon la revendication 1, **caractérisée en ce que** chaque volet (124) est fixé au socle (122) par l'intermédiaire de deux articulations (304).

3. Nacelle (100) selon la revendication 2, **caractérisée en ce que** chaque articulation (304) est constituée d'une chape solidaire du volet (124), d'une contre-chape solidaire du socle (122) et d'un axe traversant la chape et la contre-chape.

4. Nacelle (100) selon la revendication 3, **caractérisée en ce que** chaque élément de rappel (312) est un ressort de torsion emmanché sur l'axe, dont une des extrémités est contrainte contre le volet (124) et dont une autre extrémité est contrainte contre le socle (122).

5. Aéronef (10) comportant un moteur (102) et une nacelle (100) selon l'une des revendications précédentes où le moteur (102) est entouré par la nacelle (100).

## Patentansprüche

1. Gondel (100) für ein Luftfahrzeug (10), wobei die Gondel (100) umfasst:
- ein Gebläsegehäuse (108), das einen Mantelstromkanal (104) begrenzt,
- eine ortsfeste Haube (110), die um das Gebläsegehäuse (108) herum angeordnet ist,
- eine bewegliche Haube (112), die beweglich ist zwischen einer vorgeschobenen Position, in welcher die bewegliche Haube (112) die ortsfeste Haube (110) hinten verlängert, und einer zurückgezogenen Position, in welcher die bewegliche Haube (112) von der ortsfesten Haube (110) beabstandet ist, um zwischen ihnen eine Öffnung (114) zu öffnen, welche die Fluidverbindung zwischen dem Mantelstromkanal (104) und der Außenseite der Gondel (100) sicherstellt,
- Deflektoren (118), die mit der beweglichen Haube (112) fest verbunden sind, wobei in der vorgeschobenen Position die Deflektoren (118) sich um das Gebläsegehäuse (108) herum befinden und wobei in der zurückgezogenen Position die Deflektoren (118) quer zur Öffnung (114) angeordnet sind, und
- eine Gebläserampe (120), die einen Fuß (122) und Klappen (124) aufweist, wobei der Fuß (122) die Form eines Kranzes annimmt, der hinten am Gebläsegehäuse (108) befestigt ist, und wobei jede Klappe (124) einen stromabwärtigen Rand (306) und einen dem stromabwärtigen Rand (306) gegenüberliegenden stromaufwärtigen Rand (308) aufweist,
wobei die Gondel (100) **dadurch gekennzeichnet ist, dass** jede Klappe (124) auf dem Fuß (122) drehbeweglich ist zwischen einer eingefahrenen Position, in welcher der stromaufwärtige Rand (308) dann in Richtung der Vorderseite der Gondel (100) vorsteht, und einer ausgefahrenen Position, in welcher der stromaufwärtige Rand (308) dann in Richtung der Außerseite der Gondel (100) vorsteht, durch die Öffnung (114) und stromaufwärts der Deflektoren (118) in der zurückgezogenen Position, und dadurch, dass
für jede Klappe (124) die Gebläserampe (120) ein Rückstellelement (312) aufweist, welches die Klappe (124) in die ausgefahrene Position vorspannt, und dadurch, dass für jede Klappe (124) die Deflektoren (118) einen Anschlag (130) aufweisen, welcher mit der Hinterseite der Klappe (124) in Kontakt kommt, wenn sich die bewegliche Klappe (112) aus der zurückgezogenen Position in die vorgeschobene Position bewegt.

2. Gondel (100) nach Anspruch 1, **dadurch gekennzeichnet, dass** jede Klappe (124) am Fuß (122) durch zwei Gelenke (304) befestigt ist.

3. Gondel (100) nach Anspruch 2, **dadurch gekennzeichnet, dass** jedes Gelenk (304) aus einer mit der Klappe (124) fest verbundenen Gabel, einer mit dem Fuß (122) fest verbundenen Gegengabel und einer Achse, welche die Gabel und die Gegengabel durchquert, besteht.

4. Gondel (100) nach Anspruch 3, **dadurch gekennzeichnet, dass** jedes Rückstellelement (312) eine auf die Achse aufgeschobene Torsionsfeder ist, von der eines der Enden gegen die Klappe (124) gedrückt wird und von der ein anderes Ende gegen den Fuß (122) gedrückt wird.

5. Luftfahrzeug (10), welches ein Triebwerk (102) und eine Gondel (100) nach einem der vorhergehenden Ansprüche aufweist, wobei das Triebwerk (102) von der Gondel (100) umgeben ist.

## Claims

1. Nacelle (100) for an aircraft (10), said nacelle (100) comprising:
- a fan casing (108) delimiting a bypass duct (104),
- a fixed cowl (110) disposed around the fan casing (108),
- a mobile cowl (112) that is able to move between an advanced position in which the mobile cowl (112) extends the fixed cowl (110) at the rear and a retracted position in which the mobile cowl (112) is moved away from the fixed cowl (110) so as to open between them an opening (114) that establishes the fluidic communication between the bypass duct (104) and the outside of the nacelle (100),
- deflectors (118) secured to the mobile cowl (112), wherein, in the advanced position, the deflectors (118) are around the fan casing (108) and wherein, in the retracted position, the deflectors (118) are disposed across the opening (114), and
- a fan ramp (120) having a mounting base (122) and flaps (124), wherein the mounting base (122) takes the form of a ring fastened to the rear of the fan casing (108), and wherein each flap (124) has a downstream edge (306) and an upstream edge (308) opposite the downstream edge (306),
the nacelle (100) being **characterized in that** each flaps (124) is able to rotate on the mounting base (122) between a stowed position in which the upstream edge (308) then projects towards the front of the nacelle (100) and a deployed position in which the upstream edge (308) then projects towards the outside of the nacelle (100) through the opening (114) and upstream of the deflectors (118) in the retracted position, an **in that**
for each flap (124), the fan ramp (120) has a return element (312) that urges the flap (124) into the deployed position, and **in that** for each flap (124), the deflectors (118) have a stop (130) that comes into contact with the rear of said flap (124) when the mobile cowl (112) passes from the retracted position to the advanced position.

2. Nacelle (100) according to Claim 1, **characterized in that** each flap (124) is fastened to the mounting base (122) by way of two articulations (304).

3. Nacelle (100) according to Claim 2, **characterized in that** each articulation (304) is made up of a clevis secured to the flap (124), a tang secured to the mounting base (122) and a pin passing through the clevis and the tang.

4. Nacelle (100) according to Claim 3, **characterized in that** each return element (312) is a torsion spring fitted onto the pin, of which one of the ends is urged against the flap (124) and of which another end is urged against the mounting base (122).

5. Aircraft (10) having an engine (102) and a nacelle (100) according to one of the preceding claims, wherein the engine (102) is surrounded by the nacelle (100).
